# FASCICULE DE BREVET EUROPEEN

(11) **EP 4 359 287 B1**
(45) Date de publication et mention de la délivrance du brevet: **25.06.2025**
(21) Numéro de dépôt: 22732282.3
(22) Date de dépôt: 12.05.2022
(51) Int. Cl.: B62D 25/08, B62D 21/15

(54) **ENSEMBLE DE STRUCTURE DE FACE AVANT POUR UN VÉHICULE AUTOMOBILE**
STRUKTURANORDNUNG FÜR DIE FRONTSEITE EINES KRAFTFAHRZEUGS
FRONT FACE STRUCTURAL ASSEMBLY FOR A MOTOR VEHICLE

(30) Priorité: 23.06.2021 FR 2106674
(43) Date de publication de la demande: 01.05.2024
(73) Titulaire: Stellantis Auto SAS, 78300 Poissy (FR)
(72) Inventeur: MAGAS, Mihaela Maria, 70110 AUTREY LES CERRE (FR); BREAL, Ronan, 25200 BETHONCOURT (FR); KARKAR, Manaf, BOUSKOURA, 27182 (MA)
(74) Mandataire: BCIP
(86) Numéro de dépôt international: PCT/FR2022/050905
(87) Numéro de publication internationale: WO 2022/269149

(56) Documents cités:
- EP-A1- 1 834 862
- FR-A1- 2 956 643

## Description

Le domaine technique concerne les ensembles de structure pour véhicules automobiles ainsi que les véhicules présentant au moins un tel ensemble.

En matière de sécurité routière, les constructeurs d'automobiles doivent prendre en compte de multiples préoccupations et réglementations lors du développement de nouveaux véhicules afin, d'une part, d'assurer la sécurité des passagers du véhicule en cas de collision ou encore celle des autres usagers de la route les plus vulnérables tels que les piétons et, d'autre part, de maitriser les coûts de réparations des véhicules lorsqu'ils subissent des chocs urbains, dénommés chocs réparabilité subis à de faibles vitesses de l'ordre de 15 à 20 kilomètres par heure.

Pour des chocs à des vitesses supérieures, de l'ordre de 50 km/h ou plus, les véhicules sont amenés à se déformer pour absorber une partie au moins de l'énergie libérée lors du choc, afin de protéger au mieux les passagers. Le comportement à la déformation d'un véhicule automobile, sous l'effet d'un choc, est particulièrement maitrisé par les constructeurs d'automobiles qui cherchent absolument à éviter que les déformations subies par le véhicule n'impactent l'habitacle et ses occupants.

Les différents chocs que peut subir un véhicule sont simulés grâce à des procédures normalisées telles que, par exemple, celles décrites par l'organisme américain IIHS.

Un test frontal particulièrement exigent proposé par l'IIHS est appelé « Small Overlap Front Test » ou test à chevauchement frontal réduit. Ce test est un type de test de choc frontal. Il consiste à propulser un véhicule à la vitesse de 40 mph, soit environ 64 km/h, sur une barrière rigide de 1,5 m de haut, qui frappe 25 % de l'avant du véhicule, du côté du conducteur. Le test simule la collision avec un véhicule venant en sens inverse, un arbre ou un poteau électrique.

Un test à chevauchement frontal réduit affecte principalement les bords extérieurs du véhicule et les forces d'impact sont directement dirigées vers la roue avant, le système de suspension et la cloison pare-feu. Ainsi, il n'est pas rare que la roue soit repoussée vers l'arrière dans l'habitacle, en particulier dans l'espace pour les jambes, ce qui constitue une intrusion très préjudiciable susceptible d'entraîner de graves blessures aux jambes et aux pieds du conducteur. Idéalement, la structure du véhicule doit se déformer pour provoquer un déplacement transversal du véhicule afin que l'habitacle ne soit pas percuté par la barrière du test.

La majorité des véhicules modernes présentent une conception de protection passive reposant sur deux voies d'effort : une première voie d'effort constituée du longeron ou encore ligne de brancard et une deuxième voie d'effort, encore appelée voie d'effort inférieure, constituée de prolonges de berceau. Certains véhicules comportent également une troisième voie d'effort qui est ménagée autour les passages de roues.

Le document EP 1 834 862 A1 décrit un ensemble de structure pour un véhicule automobile selon le préambule de la revendication 1.

L'examen des collisions entre deux véhicules montre que bien souvent les voies d'effort ont du mal à interagir entre elles et ainsi ne parviennent pas à transmettre les efforts à l'ensemble des éléments de la structure du véhicule. Par ailleurs la troisième voie d'effort est liée à la première voie d'effort via le passage de roue et ce dernier est également fixé sur le corps de la coupelle de suspension. Ainsi, la coupelle de suspension s'avère être un point faible. La coupelle de suspension porte ainsi souvent préjudice au comportement en déformation du véhicule lors d'un choc d'un test à chevauchement frontal réduit. Bien souvent le véhicule ne se déporte pas suffisamment pour éviter que l'habitacle ne percute la barrière. Ainsi, il existe un besoin d'une solution permettant d'améliorer le comportement du véhicule lors de la déformation consécutive à un test à chevauchement frontal réduit.

La présente invention a pour objet de pallier les problèmes exposés précédemment. Dans ce contexte technique, un but de la présente invention est de fournir un ensemble de structure pour un véhicule automobile permettant d'améliorer le déport du véhicule durant le test à chevauchement frontal réduit.

A cet effet, la présente invention se rapporte à un ensemble de structure pour un véhicule automobile comprenant une ligne de brancard et une coupelle de support supérieur pour un système de suspension d'une roue, l'ensemble comprenant une paroi de passage de roue pour ladite roue, l'ensemble comprenant en outre au moins une tôle conformée pour former une voie d'effort s'étendant depuis la ligne de brancard vers la coupelle, la paroi de passage de roue étant disposé entre la coupelle, la voie d'effort et la ligne de brancard, l'ensemble étant caractérisé en ce qu'il comporte un organe de liaison reliant la coupelle et la voie d'effort, l'organe de liaison étant conformé pour se déformer de manière prédéfinie de sorte à transmettre vers la coupelle, suivant un axe transversal du véhicule, au moins une partie des efforts longitudinaux engendrés sur la voie d'effort lors d'un test à chevauchement frontal réduit.

L'invention concerne également un véhicule comportant au moins au moins un ensemble selon l'invention.

Ainsi, l'ensemble selon l'invention, grâce à l'organe de liaison, permet de lier le comportement de la coupelle de support supérieur pour un système de suspension d'une roue à la voie d'effort. Compte tenu de sa conformation, l'organe de liaison permet en se déformant, lors d'un choc d'un test à chevauchement frontal réduit, d'engendrer des efforts et donc des déformations sur la coupelle suivant un axe transversal du véhicule. En se déformant suivant un axe transversal du véhicule, la coupelle améliore le comportement du véhicule selon l'invention lors du test à chevauchement frontal réduit et notamment son déport latéral.

Dans le présent texte, un axe « transversal » se rapporte à un axe perpendiculaire à la direction longitudinale du véhicule équipé d'un ensemble. Selon un mode de réalisation de l'invention, l'organe de liaison est conçu pour s'écraser suivant un axe transversal du véhicule.

Selon une possibilité, l'organe de liaison comporte une tôle emboutie présentant une section ayant une forme de V galbée.

Selon un mode de réalisation, l'organe de liaison présente deux zones de soudure conçues pour fixer par soudure l'organe de liaison sur respectivement la coupelle et la voie d'effort.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective d'un ensemble selon l'invention montrant l'organe de liaison ainsi que la coupelle et la voie d'effort ;
[Fig. 2] la figure 2, représente une vue en perspective de l'organe de liaison de la figure 1 après un choc d'un test à chevauchement frontal réduit.

Dans ces figures, les mêmes références sont utilisées pour désigner les mêmes éléments.

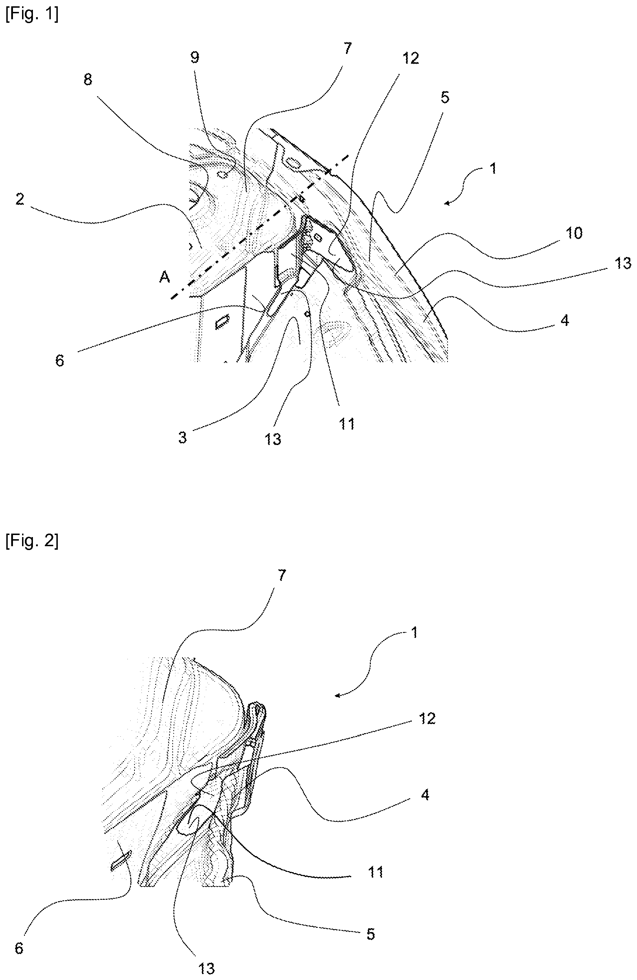

Un ensemble 1 de structure pour un véhicule automobile, illustré sur les figures 1 et 2, comprend une ligne de brancard, non illustrée, une coupelle 2 de support supérieur pour un système de suspension d'une roue, illustrée sur les figures, et, une paroi de passage de roue 3 pour ladite roue, illustrée sur la figure 1. L'ensemble comporte également au moins une tôle 4 formant une voie d'effort 5 s'étendant depuis la ligne de brancard vers la coupelle 2. La paroi de passage de roue 3 est disposée entre la coupelle 2 vers l'arrière de l'ensemble 1, la ligne de brancard en partie basse de l'ensemble 1, et la voie d'effort 5 en partie haute. Un véhicule selon l'invention comporte ainsi au moins un ensemble 1. Le véhicule selon l'invention comporte également, par exemple, avantageusement une deuxième voie d'effort constituée de prolonges de berceau, non illustrée.

La coupelle 2 est généralement une pièce en tôle relativement épaisse, avec une épaisseur de l'ordre de 2 à 3 millimètres, du fait de sa fonction de reprise des efforts du système de suspension,non illustré. Ainsi et de façon classique la coupelle 2 comporte une paroi latérale 6 formée par au moins une tôle présentant une forme sensiblement tronconique à base carrée dont les coins sont arrondis. La coupelle 2 comporte également une paroi supérieure 7 fermant le volume délimité par la paroi latérale 6. La paroi supérieure 7 présente un orifice de passage 8 d'une tête d'amortisseur et des moyens de fixation 9 de la tête d'amortisseur réalisés par exemple sous la forme d'orifices de passage de vis prévus dans la coupelle 2.

La paroi de passage de roue 3 est réalisée en tôle plus mince que la coupelle 2, avec une épaisseur de l'ordre du millimètre, parfois renforcé localement par un ou plusieurs éléments de renfort supplémentaires.

La voie d'effort 5 présente un galbe 10 orienté vers l'extérieur du véhicule. Cette voie d'effort 5 est conçue pour présenter des entrées d'effort, lors d'un choc d'un test à chevauchement frontal réduit, vers la coupelle 2 provoquant la perte du galbe 10 de la voie d'effort 5.

L'ensemble 1 comporte en outre un organe de liaison 11, illustré sur la figure 1, reliant la coupelle 2 et la voie d'effort 5. L'organe de liaison 11 est conformé pour se déformer de manière prédéfinie de sorte à transmettre vers la coupelle 2, suivant un axe transversal A du véhicule, illustré sur la figure 1, au moins une partie des efforts longitudinaux engendrés sur la voie d'effort 5 lors d'un choc d'un test à chevauchement frontal réduit. Avantageusement, l'organe de liaison 11 est conçu pour s'écraser suivant l'axe transversal A du véhicule.

Dans le mode de réalisation de l'invention, l'organe de liaison 11 comporte une tôle emboutie 12 présentant une section en forme de V galbée, suivant un plan horizontal du véhicule. L'organe de liaison 11 présente deux zones de soudure 13 conçues pour relier par soudure respectivement la coupelle 2, au niveau de la paroi latérale 6, et la voie d'effort 5.

Ainsi, Lors d'un choc d'un test à chevauchement frontal réduit, la voie d'effort 5 perd son gable 10 et transmet des efforts suivant un axe longitudinal en direction de la coupelle 2. L'organe de liaison 11 va se déformer de manière prédéfinie de sorte à s'écraser suivant l'axe transversal A du véhicule pour ainsi transmettre vers la coupelle 2 des efforts suivant l'axe transversal A.

Ainsi, l'ensemble 1 selon l'invention, grâce à son organe de liaison 11, provoque des déformations de la coupelle 2 suivant l'axe transversal A, qui aident au déport du véhicule pour éviter la barrière lors d'un test à chevauchement frontal réduit. L'invention ne se limite pas au mode de réalisation de l'ensemble décrit ci-avant, seulement à titre d'exemple, mais d'autres modes de réalisation peuvent être conçus par l'homme de métier sans sortir du cadre et de la portée de la présente invention.

## Revendications

1. Ensemble (1) de structure pour un véhicule automobile comprenant une ligne de brancard et une coupelle (2) de support supérieur pour un système de suspension d'une roue, l'ensemble comprenant une paroi de passage de roue (3) pour ladite roue, l'ensemble (1) comprenant en outre au moins une tôle (4) conformée pour former une voie d'effort (5) s'étendant depuis la ligne de brancard vers la coupelle (2), la paroi de passage de roue (3) étant disposé entre la coupelle (2), la voie d'effort (5) et la ligne de brancard, l'ensemble (1) comportant un organe de liaison (11) reliant la coupelle (2) et la voie d'effort (5), l'ensemble étant **caractérisé en ce que** l'organe de liaison (11) étant conformé pour se déformer de manière prédéfinie de sorte à transmettre vers la coupelle (2), suivant un axe transversal (A) du véhicule, au moins une partie des efforts longitudinaux engendrés sur la voie d'effort (5) lors d'un test à chevauchement frontal réduit.

2. Ensemble (1) selon la revendication 1, **caractérisé en ce que** l'organe de liaison (11) est conçu pour s'écraser suivant un axe transversal (A) du véhicule.

3. Ensemble (1) selon la revendication 1 ou 2, **caractérisé en ce que** l'organe de liaison (11) comporte une tôle emboutie (12) présentant une section ayant une forme de V galbée.

4. Ensemble (1) selon l'une des revendications 1 à 3, **caractérisé en ce que** l'organe de liaison (11) présente deux zones de soudure (13) conçues pour fixer par soudure l'organe de liaison (11) sur respectivement la coupelle (2) et la voie d'effort (5).

5. Véhicule comportant au moins un ensemble (1) selon l'une des revendications 1 à 4.

## Patentansprüche

1. Baugruppe (1) für ein Kraftfahrzeug mit einer Traglinie und einer oberen Tragschale (2) für ein Radaufhängungssystem, wobei die Baugruppe eine Raddurchgangswand (3) für das Rad aufweist, wobei die Baugruppe (1) ferner mindestens ein Blech (4) aufweist, das so ausgebildet ist, dass es eine Kraftbahn (5) bildet, die sich von der Traglinie zu der Tragschale (2) erstreckt, wobei die Raddurchgangswand (3) zwischen der Tragschale (2), der Kraftbahn (5) und der Traglinie angeordnet ist, wobei die Baugruppe (1) ein Verbindungselement aufweist (11), die die Schale (2) und die Kraftbahn (5) verbindet, wobei die Anordnung **dadurch gekennzeichnet ist, dass** das Verbindungsorgan (11) so ausgebildet ist, dass es sich in einer vorbestimmten Weise verformt, sodass es in Richtung auf die Schale (2) entlang einer Querachse (A) des Fahrzeugs zumindest einen Teil der Längskräfte überträgt, die in der Kraftbahn (5) bei einer Prüfung mit verringerter Frontüberlappung erzeugt werden.

2. Baugruppe (1) nach Anspruch 1, **dadurch gekennzeichnet, dass** das Verbindungsglied (11) so ausgebildet ist, dass es sich entlang einer Querachse (A) des Fahrzeugs zusammendrückt.

3. Baugruppe (1) nach Anspruch 1 oder 2, **dadurch gekennzeichnet, dass** das Verbindungsorgan (11) ein tiefgezogenes Blech (12) aufweist, das einen Querschnitt mit einer gebogenen V-Form aufweist.

4. Anordnung (1) nach einem der Ansprüche 1 bis 3, **dadurch gekennzeichnet, dass** das Verbindungsorgan (11) zwei Schweißzonen (13) aufweist, die dazu ausgebildet sind, das Verbindungsorgan (11) durch Schweißen an der Schale (2) bzw. der Kraftbahn (5) zu befestigen.

5. Fahrzeug mit mindestens einer Baugruppe (1) nach einem der Ansprüche 1 bis 4.

## Claims

1. A structural assembly (1) for a motor vehicle comprising a stretcher line and an upper support cup (2) for a suspension system of a wheel, the assembly comprising a wheel arch wall (3) for said wheel, the assembly (1) further comprising at least one sheet metal (4) shaped to form a force path (5) extending from the stretcher line towards the cup (2), the wheel arch wall (3) being arranged between the cup (2), the force path (5) and the stretcher line, the assembly (1) comprising connecting member (11) connecting the cup (2) and the force path (5), the assembly being **characterized in that** the connecting member (11) is shaped to deform in a predefined manner so as to transmit to the cup (2), along a transverse axis (A) of the vehicle, at least a part of the longitudinal forces generated on the force path (5) during a test with a reduced frontal overlapping.

2. Assembly (1) according to Claim 1, **characterized in that** the connecting member (11) is designed to be crushed along a transverse axis (A) of the vehicle.

3. Assembly (1) according to Claim 1 or 2, **characterized in that** the connecting member (11) comprises a stamped sheet (12) having a section having a curved V shape.

4. Assembly (1) according to one of Claims 1 to 3, **characterized in that** the connecting member (11) has two welding zones (13) designed to fix the connecting member (11) by welding to the cup (2) and the force path (5) respectively.

5. Vehicle comprising at least one assembly (1) according to one of claims 1 to 4.
